# EUROPEAN PATENT APPLICATION

(11) **EP 1 980 936 A2**
(43) Date of publication of application: **15.10.2008**
(21) Application number: 08005054.5
(22) Date of filing: 18.03.2008
(51) Int. Cl.: G06F 3/042

(54) **Optical waveguide for touch panel and touch panel using the same**

(30) Priority: 11.04.2007 JP 2007104200
(71) Applicant: NITTO DENKO CORPORATION, Ibaraki-shi, Osaka 567-8680 (JP)
(72) Inventor: Shimizu, Yusuke, Ibaraki-shi Osaka 567-8680 (JP)
(74) Representative: Kuhnen & Wacker

(57) **Abstract**

A band-shaped touch panel optical waveguide (A1) includes a planar base; an over-cladding layer; and a plurality of cores (3) arranged in juxtaposed relation between the base and the over-cladding layer, and respectively having end portions (31) arranged parallel to each other in a longitudinal edge portion of the band-shaped optical waveguide. The optical waveguide is foldable along a longitudinal axis of the optical waveguide in the longitudinal edge portion. A touch panel (10) includes a display (11) and the band-shaped optical waveguide (A1) wrapped around a periphery of the display, and the optical waveguide is folded in the longitudinal edge portion along a longitudinal axis of the optical waveguide in abutment with a peripheral edge portion of a display screen of the display.

## Description

### BACKGROUND OF THE INVENTION

### Field of the Invention

The present invention relates to a touch panel optical waveguide and a touch panel employing the same.

### Description of the Related Art

Touch panels are input devices for operating an apparatus by directly touching a display screen of a liquid crystal display device or the like by a finger, a special stylus or the like, and include a display which displays operation items, and a detection means which detects the position (coordinates) of a portion of the display screen of the display touched by the finger or the like. Information of the touch position detected by the detection means is sent in the form of a signal to the apparatus, which in turn performs an operation specified by the touch position. Examples of the apparatus employing such a touch panel include ATMs in banking facilities, ticket venders in stations and portable game machines.

A detection device employing an optical waveguide is proposed as the detection means for detecting the finger touch position on the touch panel (see, for example, US5914709:Patent Document 1 and US2006/0002655A1:Patent Document 2). As shown in Fig. 13, a touch panel of Patent Document 1 includes a planar optical waveguide B1 provided parallel to a display screen of a display 11 on a peripheral edge portion of the display 11 with the intervention of a horizontal lens 71. As shown in Fig. 14, a touch panel of Patent Document 2 includes an optical waveguide B2 wrapped around a periphery of a display 11, and a vertical lens 72 provided on the optical waveguide B2 as partly projecting upward from a display screen of the display 11. Light beams emitted from the optical waveguide B2 perpendicularly to the display screen of the display 11 are refracted parallel to the display screen of the display 11 by the vertical lens 72. In either of the touch panels, the light beams emitted from the optical waveguide B1 or B2 travel in a lattice on the display screen of the display 11. When a portion of the display screen of the display 11 is touched by a finger in this state, the finger blocks some of the light beams. Therefore, the position of the portion touched by the finger is detected by detecting a light blocked portion by a light incident portion of the optical waveguide B1 or B2.

However, the touch panel (Fig. 13) of Patent Document 1 has a greater plan area S, because the planar optical waveguide B1 is provided parallel to the display screen of the display 11 on the peripheral edge portion of the display 11 with the intervention of the horizontal lens 71. Therefore, it is difficult to reduce the area of the touch panel. The touch panel (Fig. 14) of Patent Document 2 has a greater thickness D, because a part of the optical waveguide B2 significantly projects downward from the display 11. Therefore, it is difficult to reduce the thickness of the touch panel.

### SUMMARY OF THE INVENTION

In view of the foregoing, it is an object of the present invention to provide an optical waveguide for a touch panel which permits reduction in the area and thickness of the touch panel, and to provide a touch panel employing the optical waveguide.

According to a first aspect of the present invention to achieve the aforementioned object, there is provided a band-shaped touch panel optical waveguide which comprises: a planar base; an over-cladding layer; and a plurality of cores arranged in juxtaposed relation between the base and the over-cladding layer; the cores respectively having end portions arranged parallel to each other in a longitudinal edge portion of the band-shaped optical waveguide; wherein the optical waveguide is foldable along a longitudinal axis of the optical waveguide in the longitudinal edge portion in which the end portions of the cores are arranged parallel to each other.

According to a second aspect of the present invention, there is provided a touch panel which comprises a display, and the aforementioned band-shaped touch panel optical waveguide wrapped around a periphery of the display, wherein the optical waveguide is folded in the longitudinal edge portion, in which the end portions of the cores are arranged parallel to each other, along a longitudinal axis of the optical waveguide in abutment with a peripheral edge portion of a display screen of the display.

Since the touch panel optical waveguide according to the invention is of a band shape, the touch panel optical waveguide can be wrapped around the periphery of the display. Thus, the touch panel can have a reduced plan area. Therefore, reduction in the area of the touch panel can be easily achieved. Further, the end portions of the cores are arranged parallel to each other in the longitudinal edge portion of the band-shaped optical waveguide, and the band-shaped optical waveguide is foldable along a longitudinal axis of the optical waveguide in the longitudinal edge portion in which the end portions of the cores are arranged parallel to each other. Therefore, the longitudinal edge portion of the band-shaped optical waveguide is folded in abutment with the peripheral edge portion of the display screen of the display with the band-shaped optical waveguide being wrapped around the periphery of the display. Thus, the downward projection of the optical waveguide from the display is correspondingly reduced or eliminated without the need for providing the vertical lens. Therefore, the reduction in the thickness of the touch panel is easily achieved. In that state, light beams emitted from end portions of light emitting cores travel parallel to the display screen of the display to be incident on end portions of light incident cores opposed to the light emitting cores.

Particularly, where the end portions of the cores are each branched into a plurality of portions, the number of the cores to be branched can be reduced. This makes it possible to reduce the width of the band-shaped optical waveguide, thereby reducing or eliminating the downward projection of the optical waveguide from the display. Thus, the thickness of the touch panel can be reduced.

Where the cores each have a lens portion provided at a distal end of the end portion thereof, the lens portion suppresses divergence of the light beams on a light emitting side, and converges the light beams on a light incident side. This improves the light transmission efficiency.

The band-shaped optical waveguide has cut-away portions provided in the longitudinal edge portion thereof to be positioned at corners of the periphery of the display when the band-shaped optical waveguide is wrapped around the periphery of the display of the touch panel. In this case, when the longitudinal edge portion of the band-shaped optical waveguide is folded in abutment with the peripheral edge portion of the display with the band-shaped optical waveguide being wrapped around the periphery of the display, the folding of the longitudinal edge portion can be easily achieved at the corners of the display screen of the display. This ensures a more excellent finish of the folded portion, and proper light transmission.

In the inventive touch panel, the band-shaped touch panel optical waveguide is wrapped around the periphery of the display of the touch panel, and the longitudinal edge portion of the optical waveguide in which the end portions of the cores are arranged parallel to each other is folded in abutment with the peripheral edge portion of the display screen of the display. Therefore, the touch panel has a reduced plan area and a reduced thickness.

### BRIEF DESCRIPTION OF THE DRAWINGS

Figs. 1(a) and 1(b) are a plan view and an X₁-X₁ sectional view schematically illustrating an optical waveguide according to one embodiment of the present invention;
Fig. 2 is an enlarged diagram schematically illustrating a distal end portion in a circled area C in Fig. 1 (a) ;
Fig. 3 is a perspective view schematically illustrating a touch panel employing the optical waveguide;
Fig. 4(a) is an explanatory diagram as seen perpendicularly to a display screen of a display, and Fig. 4(b) is an explanatory diagram as seen parallel to the display screen of the display and is perpendicularly to a light transmission direction, each schematically showing light transmission in the touch panel;
Figs. 5(a) and 5(b) are a plan view and an X₂-X₂ sectional view schematically showing a production method for the optical waveguide;
Figs. 6(a) and 6(b) are a plan view and an X₃-X₃ sectional view schematically showing the production method for the optical waveguide;
Figs. 7(a) and 7 (b) are a plan view and an X₄-X₄ sectional view schematically showing the production method for the optical waveguide;
Figs. 8(a) and 8(b) are a plan view and an X₅-X₅ sectional view schematically showing the production method for the optical waveguide;
Fig. 9 is a sectional view schematically showing a distal end portion of a core of an optical waveguide according to a second embodiment of the present invention.
Fig. 10 is a sectional view schematically showing a method of forming an edge portion of an over-cladding layer of the optical waveguide;
Fig. 11 is a sectional view schematically illustrating an optical waveguide according to a third embodiment of the present invention;
Fig. 12 is a plan view schematically illustrating a modification of the cores according to the embodiments;
Fig. 13 is a sectional view schematically illustrating an exemplary touch panel employing a related art optical waveguide; and
Fig. 14 is a sectional view schematically illustrating another exemplary touch panel employing the related art optical waveguide.

### DESCRIPTION OF THE PREFERRED EMBODIMENTS

Embodiments of the present invention will hereinafter be described in detail with reference to the drawings.

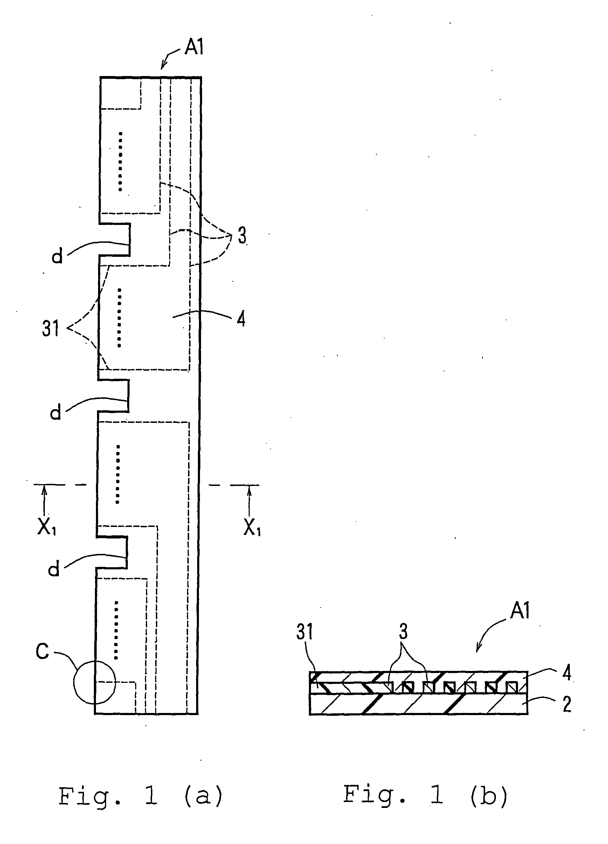

Figs. 1(a) and 1(b) illustrate an optical waveguide for a touch panel according to a first embodiment of the invention. The touch panel optical waveguide (hereinafter referred to simply as "optical waveguide") A1 according to this embodiment is of a band shape, and includes a plurality of cores 3 provided between an under-cladding layer 2 and an over-cladding layer 4 as extending in juxtaposed relation from opposite ends (upper and lower ends in Fig. 1(a)) thereof to a longitudinal edge (a left side edge in Fig. 1(a)) thereof in longitudinal half regions (upper and lower half regions in Fig. 1(a)) thereof. The band-shaped optical waveguide A1 is formed of materials to be described later, whereby the band-shaped optical waveguide is foldable along a longitudinal axis of the optical waveguide in the longitudinal edge portion (a left edge portion in Fig. 1 (a)) in which the end portions of the cores are arranged parallel to each other. In Fig. 1(a), the cores 3 are indicated by broken lines, and the thicknesses of the broken lines represent the thicknesses of the cores 3. In Figs. 1(a) and 1(b), some of the cores 3 are not shown. In Fig. 1(b), the optical waveguide A1 is illustrated on an enlarged scale. This is also true for the subsequent drawings.

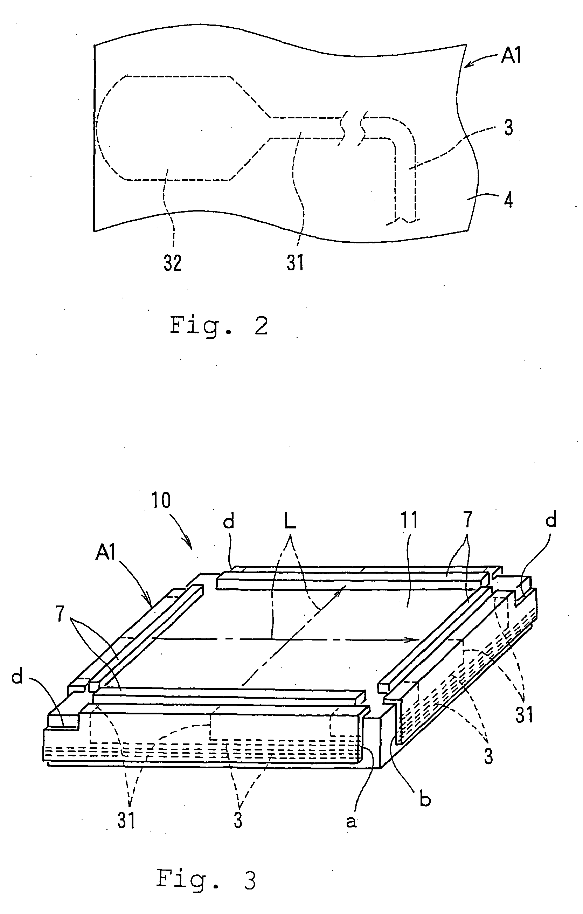

In this embodiment, the optical waveguide A1 has three recessed cut-away portions d provided at predetermined intervals in the longitudinal edge portion (the left edge portion in Fig. 1(a)) in which end portions 31 of the cores 3 are arranged parallel to each other. The cut-away portions d are to be positioned at corners of a periphery of a rectangular display 11 of the touch panel 10 when the optical waveguide A1 is wrapped around the periphery of the display 11 (see Fig. 3).

In this embodiment, as shown in Fig. 2, the end portions 31 of the cores 3 arranged parallel to each other in the longitudinal edge portion of the band-shaped optical waveguide A1 each have a wider distal end portion having an end face curved in a generally arcuate shape as seen in plan view. Thus, the distal end portion of each of the cores 3 serves as a convex lens portion 32. The shape of the lens portion 32 of the core 3 is not limited to the convex lens, but examples of the lens include a Fresnel lens and a grating lens, among which the Fresnel lens is preferred for space saving. On a light emitting side, the lens portion 32 serves to suppress lateral divergence (along the display screen of the display 11 (see Fig. 3)) of a light beam emitted from a core end. On a light incident side, the lens portion 32 serves to laterally converge an incident light beam (along the display screen of the display 11 (see Fig. 3)).

For use, the optical waveguide A1 is wrapped around the periphery of the rectangular display 11 of the touch panel 10 as shown in Fig. 3. When the optical waveguide A1 is wrapped, the longitudinal edge portion (on an upper side in Fig. 3) of the optical waveguide A1 in which the end portions 31 of the cores 3 are arranged parallel to each other is located on the side of the display screen of the display 11 (on the upper side in Fig. 3) and projects from the display screen of the display 11. The longitudinal edge portion of the optical waveguide A1 projecting from peripheral edges of the display 11 is folded in abutment with a peripheral edge portion of the display screen of the display 11. In this wrapped state, two L-shaped portions of the optical waveguide A1 (corresponding to the upper half region and the lower half region of the optical waveguide A1 in Fig. 1(a)) are disposed in opposed relation on opposite sides of the display screen of the display 11. Thus, one of the opposed L-shaped portions serves as a light emitting portion, and the other L-shaped portion serves as a light incident portion. With this arrangement, light beams L travel in a lattice form on the display screen of the display 11 of the touch panel 10. When the optical waveguide A1 is wrapped around the periphery of the display 11, the over-cladding layer 4 may face outward or may face inward.

With the inventive band-shaped optical waveguide A1 thus wrapped around the periphery of the display 11, the inventive touch panel 10 has a reduced plan area. Further, with the longitudinal edge portion of the inventive band-shaped optical waveguide A1 folded in abutment with the peripheral edge portion of the display screen of the display 11, the downward projection of the optical waveguide A1 from the display 11 is correspondingly reduced or eliminated, whereby the touch panel 10 has a reduced thickness.

In this embodiment, band-shaped lenses 7 are provided along the edge portion of the optical waveguide in which the end portions 31 of the cores are arranged parallel to each other, so that the light beams traveling between the opposed distal end portions of the cores 3 pass through two of the band-shaped lenses 7. On the light emitting side, the band-shaped lenses 7 serve to suppress vertical divergence (along a plane perpendicular to the display screen of the display 11) of light beams emitted from the distal end portions of the cores 3. On the light incident side, the band-shaped lenses 7 serve to vertically converge incident light beams (along a plane perpendicular to the display screen of the display 11) so that the converged light beams are incident on the distal end portions of the cores 3. The band-shaped lenses 7 have a thickness (height) of about 3 mm to about 10 mm, and a width of about 3 mm to about 10 mm. Core ends disposed at one end a of the optical waveguide A1 on the light emitting side are connected to a light source (not shown), and core ends disposed at the other end b of the optical waveguide A1 on the light incident side are connected to a detector (not shown). In Fig. 3, the light beams L are partly shown.

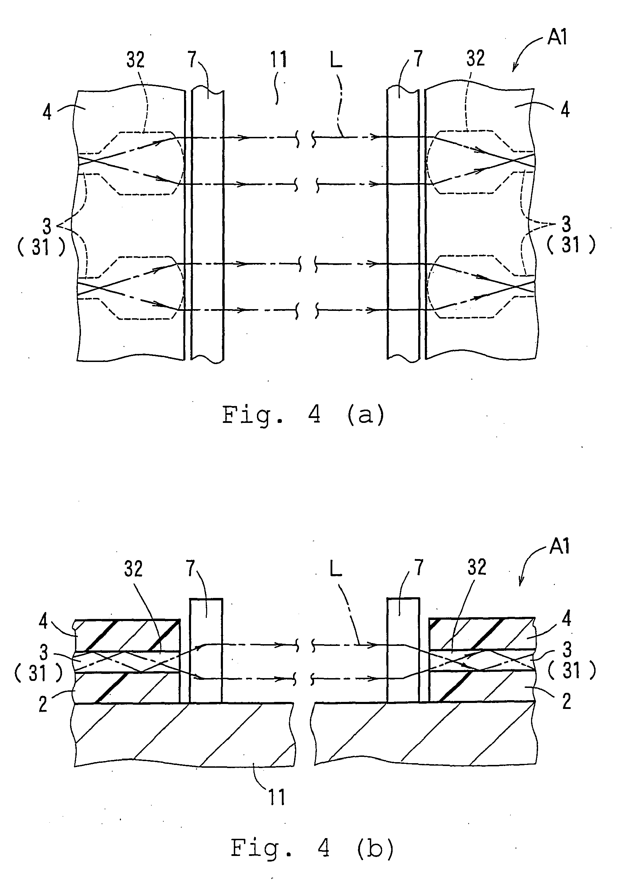

As shown in Figs. 4(a) and 4(b), the lateral divergence (along the display screen of the display 11) of the light beams L emitted from the distal end portions of the cores 3 in the light emitting portion of the optical waveguide A1 is first suppressed by the refractive action of the lens portions 32 in the distal end portions of the cores 3. Then, the vertical divergence of the light beams L (along the plane perpendicular to the display screen of the display 11) is suppressed by the refractive action of the band-shaped lenses 7. The light beams L travel along the display screen of the display 11. That is, the light beams L traveling along the display screen of the display 11 are collimated with their divergence suppressed by the refractive actions of the lens portions 32 of the cores 3 and the band-shaped lenses 7.

The collimated light beams incident on the band-shaped lenses 7 provided along the light incident portion of the optical waveguide A1 are converged vertically (along the plane perpendicular to the display screen of the display 11) by the refractive action of the band-shaped lenses 7. Then, the light beams L are further converged laterally (along the display screen of the display 11) by the refractive action of the lens portions 32 in the distal end portions of the cores 3. That is, the light beams L to be incident on the light incident portion of the optical waveguide A1 are converged by the refractive action of the band-shaped lenses 7 and the lens portions 32 of the cores 3, and the converged light beams L respectively pass through the cores 3.

The optical waveguide A1 and the band-shaped lenses 7 cause the collimated light beams L to travel in a lattice on the display screen of the display 11 of the touch panel 10. When a portion of the display screen of the display 11 is touched by a finger in this state, the position of the portion touched by the finger is detected. In addition, the light beams L to be incident on the cores 3 of the optical waveguide A1 are provided by converging the emitted light beams L. Therefore, the optical waveguide A1 has a higher light transmission efficiency, so that detection accuracy is improved.

The size of the optical waveguide A1 is not particularly limited, but may be determined so as to conform to the size of the display 11 of the touch panel 10. For example, the band-shaped optical waveguide A1 has a length of about 120 mm to about 1200 mm, and a width of about 5 mm to about 10 mm. A portion of the optical waveguide A1 to be positioned around the periphery of the display 11 (which is not folded in abutment with the peripheral edge portion of the display screen of the display 11) has a width of about 2.5 mm to about 5 mm. The cut-away portions d to be positioned at the corners of the periphery of the display 11 each have a width of about 1 mm to about 10 mm (as measured longitudinally of the optical waveguide A1), and a depth of about 1.5 mm to about 5 mm (as measured widthwise of the optical waveguide A1). The number of the cores 3 is not particularly limited, but may be determined according to the number of operation items to be displayed on the display screen of the display 11, for example, about 20 to about 150.

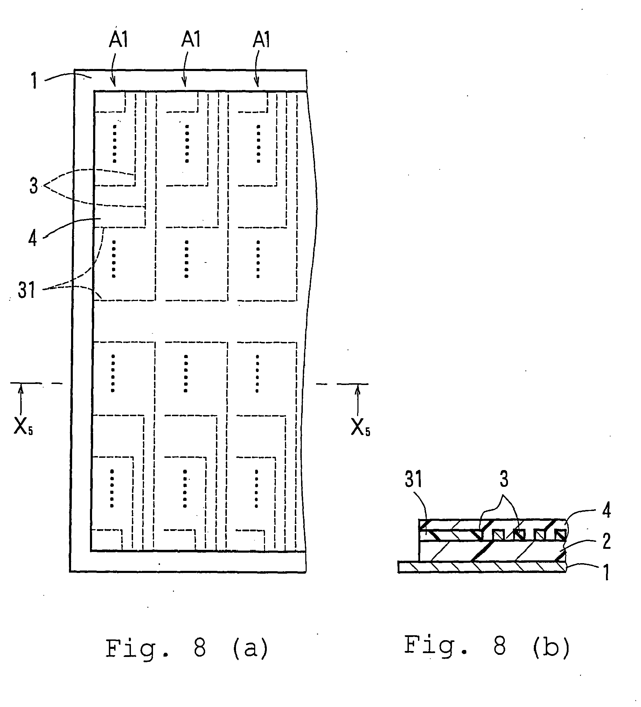

Next, an exemplary production method for the optical waveguide A1 according to the present invention will be described. Here, a plurality of band-shaped optical waveguides A1 are produced in juxtaposed relation with their side edges adjoining each other (see Fig. 8 (a)).

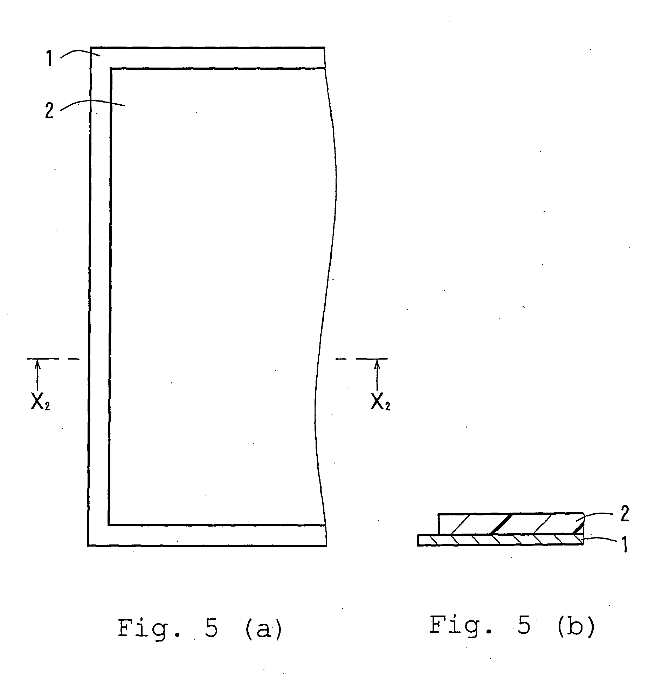

As shown in Figs. 5(a) and 5(b), a planar base 1 for the production of the optical waveguide A1 (see Figs. 1(a) and 1(b)) is first prepared. A material for the formation of the base 1 is not particularly limited, but examples thereof include resins, glass, silicone and metals. Examples of the resins include polypropylenes, polyethylenes, polyethylene naphthalates, polyesters, polyacrylates, polycarbonates, polynorbornenes and polyimides. Particularly, where the optical waveguide A1 is used with the base 1 bonded thereto, the base 1 preferably has a lower refractive index for suppressing leakage of light to the base 1, and preferred examples of the material include polypropylenes and silicon. The thickness of the base 1 is not particularly limited, but is typically in the range of 20 µm (for a film-like base 1) to 5 mm (for a plate-like base 1).

In turn, an under-cladding layer 2 is formed on a predetermined region of a surface of the base 1. Examples of a material for the formation of the under-cladding layer 2 include polyimide resins, epoxy resins, photopolymerizable resins and photosensitive resins. The method for the formation of the under-cladding layer 2 is not particularly limited, but the formation may be achieved, for example, by applying a varnish prepared by dissolving any of the aforementioned resins in a solvent onto the base 1, and then curing the varnish. The application of the varnish is achieved, for example, by a spin coating method, a dipping method, a casting method, an injection method, an ink jet method or the like. The curing is carried out as appropriate depending on the material for the formation of the under-cladding layer 2, the thickness of the under-cladding layer 2 and the like. Where a polyimide resin is employed as the material for the formation of the under-cladding layer 2, for example, the curing is achieved by a heat treatment at 300°C to 400°C for 60 to 180 minutes. Where a photopolymerizable resin is employed as the material for the formation of the under-cladding layer 2, the curing is achieved by irradiation with ultraviolet radiation at 1000 mJ/cm² to 5000 mJ/cm² followed by a heat treatment at 80°C to 120°C for 10 to 30 minutes. The thickness of the under-cladding layer 2 is typically 5 µm to 50 µm for multimode optical waveguides, and 1 µm to 20 µm for single-mode optical waveguides.

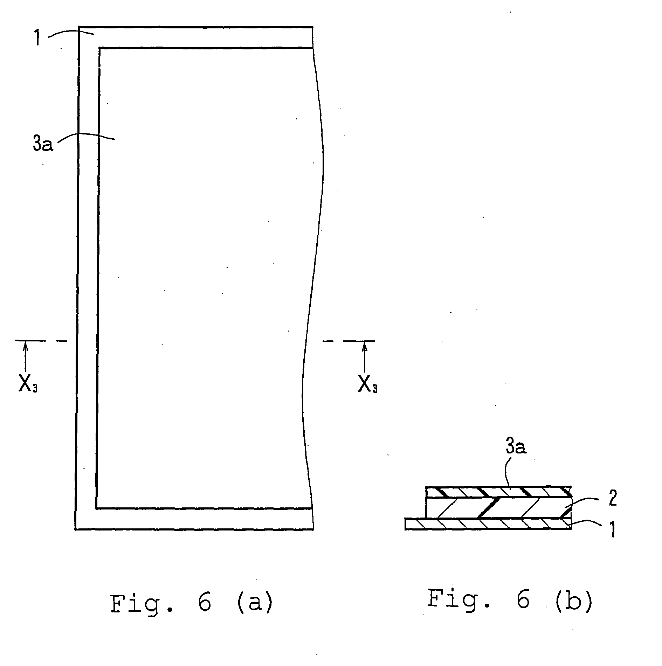

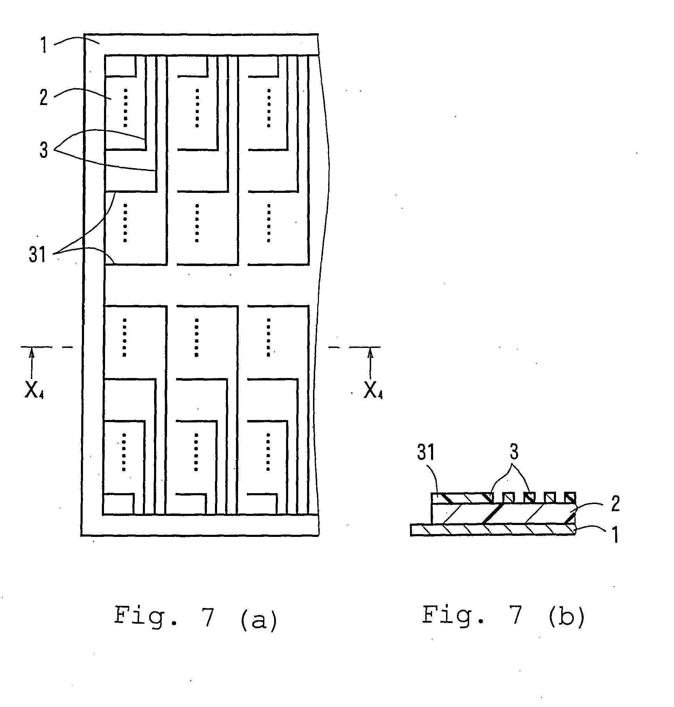

Next, as shown in Figs. 6 (a) and 6 (b), a resin layer 3a, later serving as cores 3, (see Figs. 7 (a) and 7(b)) is formed on a surface of the under-cladding layer 2. An exemplary material for the formation of the resin layer 3a is a photopolymerizable resin, which is a material having a greater refractive index than the materials for the formation of the aforementioned under-cladding layer 2 and an over-cladding layer 4 to be described later (see Fig. 8). The refractive index may be adjusted, for example, by selection of the types of the materials for the formation of the under-cladding layer 2, the cores 3 and the over-cladding layer 4 and adjustment of the composition ratio thereof. The method for the formation of the resin layer 3a is not particularly limited, but the formation may be achieved in the same manner as described above, for example, by applying a varnish prepared by dissolving the photopolymerizable resin in a solvent onto the under-cladding layer 2, and then drying the varnish. The application of the varnish is achieved in the same manner as described above, for example, by a spin coating method, a dipping method, a casting method, an injection method, an ink jet method or the like. The drying is achieved by a heat treatment at 50°C to 120°C for 10 to 30 minutes.

Then, the resin layer 3a is exposed to radiation through a photo mask formed with an opening pattern corresponding to a desired pattern of the cores 3 (see Figs. 7 (a) and 7(b)). Exposed portions of the resin layer later serve as the cores 3. Exemplary methods for the exposure include projection exposure, proximity exposure and contact exposure. Where the resin layer 3a is non-adhesive, a contact exposure method is preferably employed in which the photo mask is brought into contact with the resin layer 3a. This improves the operating efficiency and permits reliable patterning of a latent image. Examples of the radiation for the exposure include visible light, ultraviolet radiation, infrared radiation, X-rays, α-rays, β-rays and γ-rays. Preferably, ultraviolet radiation is used. The use of ultraviolet radiation permits irradiation at a higher energy to provide a higher curing speed. In addition, a less expensive smaller-size irradiation apparatus can be employed, thereby reducing production costs. Examples of a light source for ultraviolet radiation include a low-pressure mercury-vapor lamp, a high-pressure mercury-vapor lamp and an ultra-high-pressure mercury-vapor lamp. The dose of the ultraviolet radiation is typically 10 mJ/cm² to 10000 mJ/cm², preferably 50 mJ/cm² to 3000 mJ/cm².

After the exposure, a heat treatment is performed to complete a photoreaction. The heat treatment is performed at 80°C to 250°C, preferably at 100°C to 200°C, for 10 seconds to two hours, preferably for five minutes to one hour. Thereafter, a development process is performed by using a developing solution to dissolve away an unexposed portion of the resin layer 3a, whereby the resin layer 3a is patterned (see Figs. 7(a) and 7(b)). Then, the developing solution in the patterned resin layer 3a is removed by a heat treatment, whereby the pattern of the cores 3 is formed as shown in Figs. 7 (a) and 7(b). In this embodiment, the pattern of the cores 3 is formed in each of portions of the resin layer corresponding to the optical waveguides A1 to be produced in juxtaposed relation (see Fig. 8(a)). Further, distal ends of light emitting cores 3 and distal ends of light incident cores 3 each have a convex lens portion 32 (see Fig. 2) as seen in plan view. In addition, the number of the distal ends (lens portions 32) of the light emitting cores is equal to the number of the distal ends (lens portions 32) of the light incident cores, and the optical axes of the light emitting cores are respectively aligned with the optical axes of the light incident cores. The heat treatment is typically performed at 80°C to 120°C for 10 to 30 minutes. The cores 3 typically each have a thickness of 20 µm to 100 µm for the multimode optical waveguides, and 2 µm to 10 µm for the single-mode optical waveguides. Exemplary methods to be employed for the development include an immersion method, a spray method and a puddle method. Examples of the developing solution to be used include an organic solvent and an organic solvent containing an alkaline aqueous solution. The developing solution and conditions for the development are properly selected depending on the composition of the photopolymerizable resin.

Next, as shown in Figs. 8(a) and 8(b), a varnish prepared from the same material as the varnish for the under-cladding layer 2 is applied in the same manner as described above to cover the cores 3 for formation of an over-cladding layer 4. Subsequently, the resulting layer is cured in the same manner as for the formation of the under-cladding layer 2. Where a polyimide resin is employed as the material for the formation of the over-cladding layer 4, for example, a heat treatment is performed. Where a photopolymerizable resin is employed, the curing is achieved by irradiation with ultraviolet radiation followed by a heat treatment. Thus, the over-cladding layer 4 is formed. Exemplary materials for the formation of the over-cladding layer 4 are those employed for the formation of the under-cladding layer 2. The material for the formation of the over-cladding layer 4 may be the same as or different from the material for the formation of the under-cladding layer 2. The thickness of the over-cladding layer 4 is typically 5 µm to 100 µm for the multimode optical waveguides, and 1 µm to 20 µm for the single-mode optical waveguides. Thus, the band-shaped optical waveguides A1 are produced in juxtaposed relation with their side edges adjoining each other.

Subsequently, the base 1 is removed from the under-cladding layer 2. The base 1 and the under-cladding layer 2 are bonded to each other with a smaller adhesive force because of their formation materials and, therefore, can be readily pulled apart from each other by air suction. Thereafter, the resulting product is cut into the optical waveguides A1 by stamping with a cutting die. Thus, the band-shaped optical waveguides A1 each shown in Figs. 1 (a) and 1 (b) are provided.

Where a film base is employed as the base 1, the base 1 may be removed from the under-cladding layer 2 after the resulting product including the film base 1 is cut. Alternatively, the optical waveguide A1 may be used together with the base 1 without removal of the base 1.

In order to suppress leakage of the light beams to the under-cladding layer 2 or the base 1, (refractive index of cores 3) > (refractive index of over-cladding layer 4) > (refractive index of under-cladding layer 2 or base 1) is preferably satisfied.

In the first embodiment, with the optical waveguide A1 installed for use, the band-shaped lenses 7 for improvement of the light transmission efficiency are provided along the edge portion of the optical waveguide A1 in which the end portions 31 of the cores 3 are arranged parallel to each other. If a predetermined light transmission efficiency is provided without the provision of the band-shaped lenses 7, however, there is no need to provide the band-shaped lenses 7.

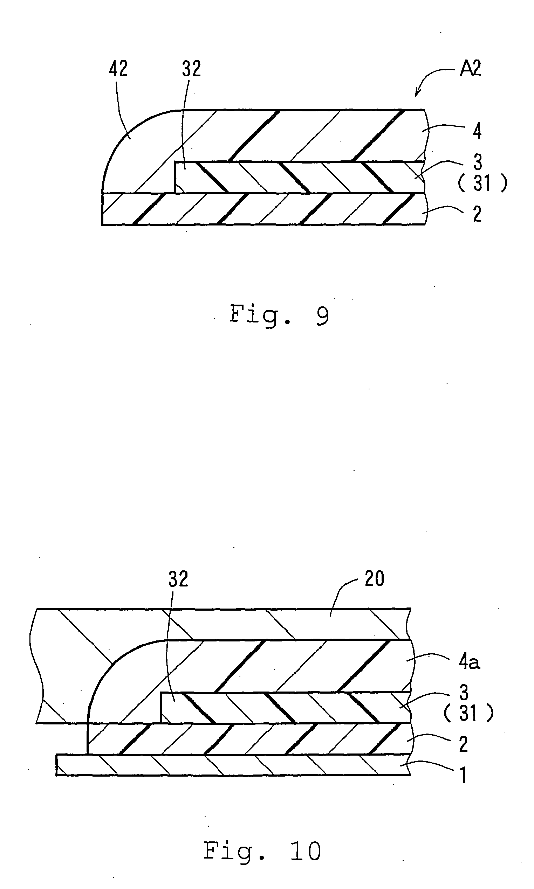

Fig. 9 illustrates an optical waveguide according to a second embodiment of the present invention. The optical waveguide A2 according to this embodiment is configured in substantially the same manner as the optical waveguide A1 of the first embodiment (see Figs. 4 (a) and 4(b)), except that the over-cladding layer 4 has a lens portion (second lens portion) 42 provided in an edge portion thereof covering the lens portions 32 in the distal end portions of the cores 3 as having a quadrant convex shape as seen from a lateral side. The optical waveguide A2 is wrapped around the periphery of the display 11 with the over-cladding layer 4 facing outward and with the longitudinal edge portion thereof folded in abutment with the peripheral edge portion of the display screen of the display 11, so that a portion of the over-cladding layer 4 in the folded edge portion is positioned on an upper side. In the optical waveguide A2, the lens portion (second lens portion) 42 in the edge portion of the over-cladding layer 4 has the same functions as the band-shaped lenses 7 (see Fig. 3) employed in the first embodiment. That is, the lens portion 42 serves to suppress the vertical divergence (along a plane perpendicular to the display screen of the display 11) of the light beams emitted from the distal end portions of the cores 3 on the light emitting side, and vertically converge the incident light beams (along a plane perpendicular to the display screen of the display 11) so that the converged light beams are incident on the distal end portions of the cores 3 on the light incident side. In the second embodiment, therefore, there is no need to provide the band-shaped lenses 7 (see Fig. 3) when the optical waveguide A2 is installed for use. The other components of the second embodiment are the same as those of the first embodiment, and like components are denoted by like reference characters.

The lens portion (second lens portion) 42 is formed in the edge portion of the over-cladding layer 4 in the following manner when the over-cladding layer 4 is formed. As shown in Fig. 10, a varnish (layer 4a) later serving as the over-cladding layer 4 (see Fig. 9) is pressed by a mold 20 having a mold surface conformable to a desired shape of the over-cladding layer 4. Particularly, an edge portion of the layer 4a covering the lens portions 32 in the distal end portions of the cores 3 is molded into a convex lens shape as seen from a lateral side by the mold 20. Where a polyimide resin is employed as the material for the formation of the over-cladding layer 4, for example, the layer 4a is cured by a heat treatment. Where a photopolymerizable resin is employed, the curing is achieved by irradiation with ultraviolet radiation through the mold 20 followed by a heat treatment. Thus, the method for curing the layer 4a varies depending on the material for the formation of the over-cladding layer 4. Where the curing is achieved by the heat treatment, a quartz mold, a polymer mold or a metal mold may be employed as the mold 20. Where the curing is achieved by the irradiation with the ultraviolet radiation, a quartz mold, for example, is employed which transmits the ultraviolet radiation. Thereafter, the resulting product is demolded. Thus, the over-cladding layer 4 is formed as having the lens portion (second lens portion) 42 provided in the edge portion thereof as shown in Fig. 9.

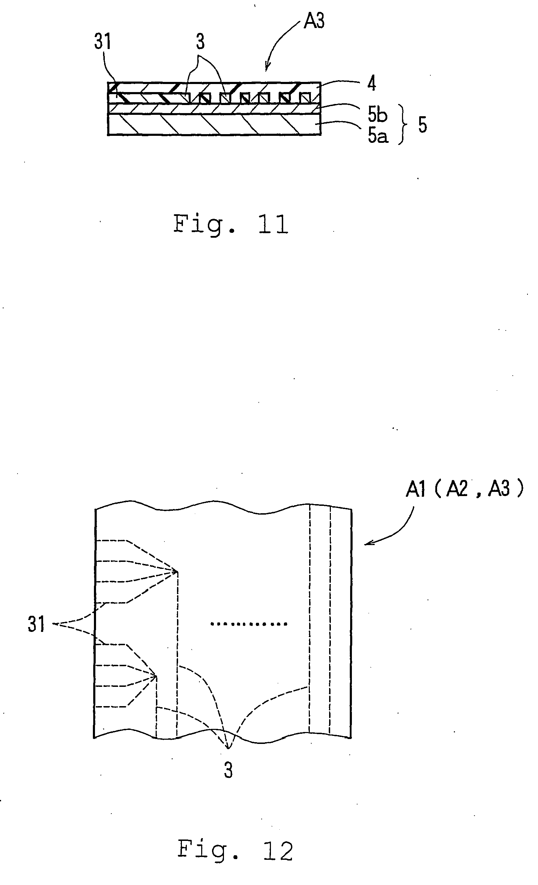

Fig. 11 illustrates an optical waveguide according to a third embodiment of the present invention. The optical waveguide A3 according to this embodiment is configured in substantially the same manner as the optical waveguide A2 (see Fig. 9) according to the second embodiment, except that a base 5 including a film 5a and a thin metal film 5b provided on a surface of the film 5a is employed instead of the under-cladding layer 2 (see Fig. 1(b)), that the cores 3 and the over-cladding layer 4 are provided on a surface of the thin metal film 5b, and that the surface of the thin metal film 5b acts as a reflective surface which reflects the light beams passing through the cores 3. Therefore, like components will be denoted by like reference characters.

More specifically, the film 5a is not particularly limited, but an example thereof is a resin film. Exemplary materials for formation of the resin film include polyethylene naphthalates, polyesters, polyacrylates, polycarbonates, polynorbornenes and polyimides. The thickness of the film is not particularly limited, but is typically in the range of 0.3 mm to 3 mm.

Formation of the thin metal film 5b is achieved by plating or evaporation. Exemplary materials for the formation of the thin metal film 5b include nickel, copper silver, gold, chromium, aluminum, zinc, tin, cobalt, tungsten, platinum and palladium, and alloy materials containing two or more of these elements. The thickness of the thin metal film is not particularly limited, but is typically 50 nm to 5 µm.

In a production method for the optical waveguide A3 according to this embodiment, a film 5a is prepared, and a thin metal film 5b is formed on a surface of the film 5a by plating or evaporation. Then, cores 3 and an over-cladding layer 4 are formed on a surface of the thin metal film 5b in the same manner as in the second embodiment. Thus, the optical waveguide A3 is provided.

An optical waveguide according to a fourth embodiment of the present invention is configured in substantially the same manner as the optical waveguide A1 (see Fig. 1(b)) according to the first embodiment, except that a base 5 including a film 5a and a thin metal film 5b provided on a surface of the film 5a is employed instead of the under-cladding layer 2 as in the third embodiment (see Fig. 11), that the cores 3 and the over-cladding layer 4 are provided on a surface of the thin metal film 5b, and that the surface of the thin metal film 5b acts as a reflective surface which reflects the light beams passing through the cores 3.

In the embodiments described above, the end portions 31 of the light emitting cores 3 and the light incident cores 3 may be each branched into a plurality of portions (four portions in Fig. 12). With this arrangement, the number of the branched cores 3 is reduced, so that the band-shaped optical waveguides A1 to A3 each have a reduced width. This reduces or eliminates the downward projection of the optical waveguide A1, A2, A3 from the display 11, thereby permitting reduction in the thickness of the touch panel 10.

In the embodiments described above, the lens portions 32 are provided in the distal end portions of the cores 3, but the invention is not limited to this configuration. The provision of the lens portions 32 is not essential. Alternatively, band-shaped lens or the like having the same functions as the lens portions 32 (for the suppression of the lateral divergence of the light beams and for the lateral convergence of the light beams) may be provided as a separate member in front of the distal end portions of the cores.

In the embodiments described above, the optical waveguides A1 to A3 each have the cut-away portions d provided in the longitudinal edge portion thereof to be positioned at the corners of the periphery of the display 1.1. This ensures a more excellent finish of the folded portion, and proper light transmission. However, where the proper light transmission is ensured without the provision of the cut-away portions d, there is no need to provide the cut-away portions d.

Further, the optical waveguides A1 to A3 may each have reinforcement layers bonded to outer surface portions thereof to be bent at the corners of the periphery of the display 11. A material for the reinforcement layers is preferably a metal film or a resin film for easy bending in conformity with the corners and for the strength of the reinforcement layers, particularly preferably a metal film for an excellent bent shape retaining property. The reinforcement layers preferably each have a thickness in the range of 10 µm to 30 µm, a length not less than 10 mm (as measured longitudinally of the band-shaped optical waveguide A1, A2, A3), and a width equal to the width of bent portions of the optical waveguide A1, A2, A3. A material for formation of the metal film is not particularly limited, but examples thereof include 42-alloy, stainless steel, copper and aluminum. A material for formation of the resin film is not particularly limited, but examples thereof include polyethylene naphthalates (PEN), polyethylene terephthalates (PET), polyesters, polyacrylates, polycarbonates, polynorbornenes and polyimides.

Next, an example of the invention will be described. It should be noted that the present invention is not limited to the inventive example.

### Example 1

### Material for Formation of Under-Cladding Layer and Over-Cladding Layer

A material for formation of an under-cladding layer and an over-cladding layer was prepared by mixing 35 parts by weight of bisphenoxyethanolfluorene glycidyl ether (component A) represented by the following general formula (1), 40 parts by weight of (3'-4'-Epoxycyclohexane)methyl 3'-4'-Epoxycyclohexyl-carboxylate (an alicyclic epoxy CELLOXIDE 2021P manufactured by Daicel Chemical Industries, Ltd.) (component B), 25 parts by weight of an alicyclic epoxy resin having a cyclohexene oxide skeleton (CELLOXIDE 2081 manufactured by Daicel Chemical Industries, Ltd.) (component C), and 2 parts by weight of a 50% propione carbonate solution of 4,4' -bis[di(β-hydroxyethoxy)phenylsulfinio]phenylsulfide bishexafluoroantimonate (component D). 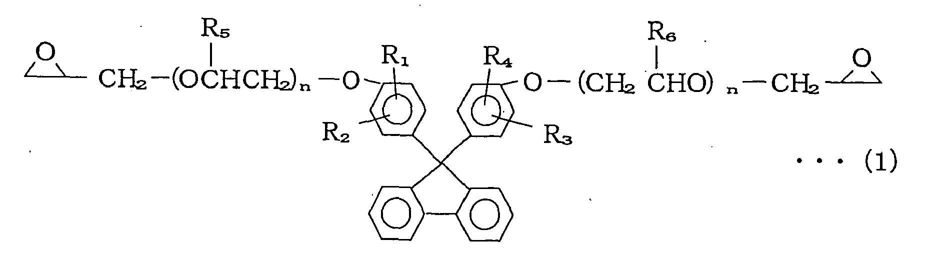 wherein R1 to R6 are hydrogen atoms, and n=1.

### Material for Formation of Cores

A material for formation of cores was prepared by dissolving 70 parts by weight of the aforementioned component A, 30 parts by weight of 1,3,3-tris{4-[2-(3-oxetanyl)]butoxyphenyl}butane and one part by weight of the aforementioned component D in ethyl lactate.

### Production of Optical Waveguide

The material for the formation of the under-cladding layer was applied onto a surface of a polyethylene terephthalate (PET) film (100 mm × 100 mm × 188 µm (thickness)) by an applicator, and then exposed to ultraviolet radiation at 2000 mJ/cm². Subsequently, a heat treatment was performed at 100°C for 15 minutes to form an under-cladding layer. The under-cladding layer had a thickness of 20 µm as measured by a contact filmthicknessmeter. Further, the under-cladding layer had a refractive index of 1.542 at a wavelength of 830 nm.

Then, the material for the formation of the cores was applied onto a surface of the under-cladding layer by an applicator, and dried at 100°C for 5 minutes. In turn, a synthetic quartz chromatic mask (photo mask) having an opening pattern conformable to a core pattern to be formed was placed on the resulting core material film, and the core material filmwas exposed to ultraviolet radiation emitted from above at 4000 mJ/cm² by a proximity exposuremethod. Further, a heat treatment was performed at 80°C for 15 minutes. Subsequently, a development process was performed by using a γ-butyrolactone aqueous solution to dissolve away unexposed portions, and then a heat treatment was performed at 120°C for 15 minutes, whereby cores were formed as each having a convex lens portion as seen in plan view at a light emitting or light incident end thereof. The number of cores formed in each of longitudinal half regions of the band-shaped optical waveguide was 116. The end portions of the cores were each branched into four portions, which were each formed with the lens portion. Thus, the total number of the lens portions on each of a light emitting side and a light incident side was 464 (= 116 × 4). The cores each had a sectional area of 12 µm (width) × 24 µm (height) as measured by SEM. The lens portions each had a size of 228 µm (width) × 24 µm (height) × 600 µm (length). The cores each had a refractive index of 1. 602 at a wavelength of 830 nm.

Then, the material for the formation of the over-cladding layer was applied by an applicator to cover the cores, and exposed to ultraviolet radiation at 2000 mJ/cm². In turn, a heat treatment was performed at 120°C for 15 minutes. Thus, the over-cladding layer was formed. The over-cladding layer had a thickness of 1000 µm as measured by the contact film thickness meter. Further, the over-cladding layer had a refractive index of 1.542 at a wavelength of 830 nm.

Thereafter, the resulting product was cut together with the PET film by a cutting die. Thus, an optical waveguide fixed to the PET film was provided. The optical waveguide had a length of 286.6 mm, a width of 6 mm and a thickness of 74 µm, and the three cut-away portions each had a width of 3 mm and a depth of 3 mm.

The optical waveguide thus provided was wrapped around the periphery of a rectangular display of a touch panel, and an edge portion (3-mm wide edge portion) of the optical waveguide in which the end portions of the cores were arranged parallel to each other was folded in abutment with a peripheral edge portion of a display screen of the display. Then, band-shaped lenses (10 mm (height) × 5 mm (width)) were placed along edges of the folded portion on the display screen of the display.

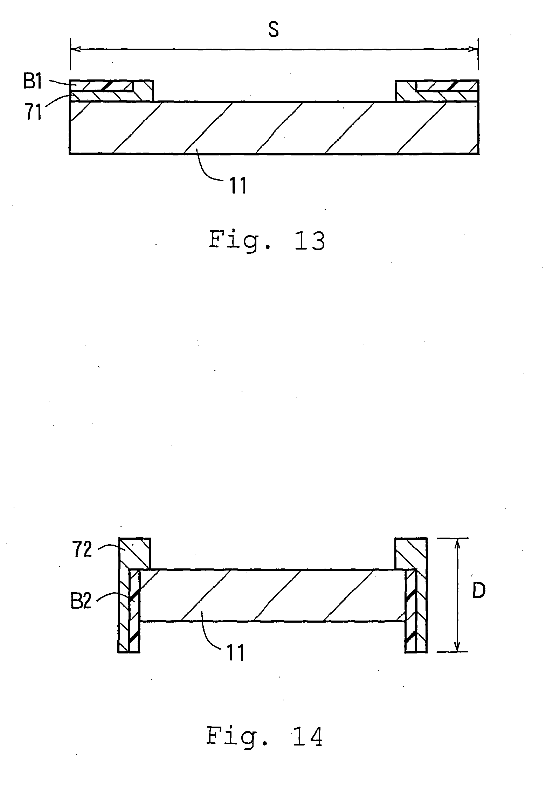

As a result, the touch panel with the band-shaped optical waveguide wrapped around the periphery of the display thereof and with the band-shaped lenses placed on the display screen of the display thereof had a reduced plan area and a reduced thickness as compared with a touch panel employing the related art optical waveguide (see Figs. 13 and 14).

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A band-shaped touch panel optical waveguide comprising:
a planar base;
an over-cladding layer; and
a plurality of cores arranged in juxtaposed relation between said planer base and said over-cladding layer, said cores respectively having end portions arranged parallel to each other in a longitudinal edge portion of said band-shaped optical waveguide,
wherein said optical waveguide is foldable in the longitudinal edge portion along a longitudinal axis of said optical waveguide.

2. A touch panel optical waveguide as set forth in claim 1, wherein said end portions of said cores are each branched into a plurality of portions.

3. A touch panel optical waveguide as set forth in claim 1 or 2, wherein said cores each have a lens portion provided at a distal end of said end portion thereof.

4. A touch panel optical waveguide as set forth in any one of claims 1 to 3, further comprising cut-away portions provided in said longitudinal edge portion thereof to be positioned at corners of a periphery of said display when said band-shaped optical waveguide is wrapped around the periphery of said display of said touch panel.

5. A touch panel optical waveguide as set forth in any one of claims 1 to 4, wherein said planar base is a film formed with a thin metal film, or an under-cladding layer.

6. A touch panel comprising:
a display; and
a band-shaped touch panel optical waveguide wrapped around a periphery of said display,
wherein said optical waveguide includes a planar base, an over-cladding layer, and a plurality of cores arranged in juxtaposed relation between said planer base and said over-cladding layer, said cores respectively having end portions arranged parallel to each other in a longitudinal edge portion of said optical waveguide;
wherein said optical waveguide is folded in said longitudinal edge portion along a longitudinal axis of said optical waveguide in abutment with a peripheral edge portion of a display screen of said display.
